# EUROPÄISCHE PATENTANMELDUNG

(11) **EP 4 807 593 A1**
(43) Veröffentlichungstag der Anmeldung: **16.09.2026**
(21) Anmeldenummer: 25163015.8
(22) Anmeldetag: 11.03.2025
(51) Int. Cl.: G06F 21/44, H04L 9/40

(54) **SCHNITTSTELLENEINRICHTUNG UND VERFAHREN ZUM BEREITSTELLEN EINES AUTHENTISIERUNGSCREDENTIALS FÜR EINE KRYPTOGRAPHISCH GESCHÜTZTE DATENKOMMUNIKATION**

(71) Anmelder: Siemens Aktiengesellschaft, 80333 München (DE)
(72) Erfinder: Falk, Rainer, 85435 Erding (DE)
(74) Vertreter: Siemens Patent Attorneys

(57) **Zusammenfassung**

Die Erfindung betrifft Schnittstelleneinrichtung (R-IO) mit zumindest einer Schnittstelle (IO-IF) zum Verbinden mit mindestens einem Sensor (S) und/oder Aktor (A), wobei die Schnittstelleneinrichtung mit Hilfe einer Netzwerkschnittstelle (NW-IF) über ein Datenkommunikationsnetzwerk (NW) aneineSteuerungseinrichtung (vPLC) Sensordaten und/oder Aktorsteuerdaten überträgt, die einen technischen Prozess überwacht und/oder steuert,
- aufweisend eine Berechtigungsnachweiseinheit (CE), welche dazu ausgelegt ist, eine Identifizierungsinformation des zumindest einen über die Schnittstelle verbundenen Sensors und/oder Aktors über die Schnittstelle zu ermitteln sowie die ermittelte Identifizierungsinformation auf Übereinstimmung mit einer zuvor hinterlegten Referenzidentifizierungsinformation zu überprüfen und ein der ermittelten Identifizierungsinformation zugeordnetes Authentisierungscredential bereitzustellen,
- und aufweisend eine Authentisierungseinheit (AE), welche dazu ausgelegt ist, das bereitgestellte Authentisierungscredential zur kryptographisch geschützten Datenkommunikation mit der Steuerungseinrichtung zu verwenden, wenn das Überprüfungsergebnis positiv ist,
- ansonsten die Verwendung des bereitgestellten Authentisierungscredials zur kryptographisch geschützten Datenkommunikation mit der Steuerungseinrichtung zu unterlassen.

## Beschreibung

Die Erfindung betrifft eine Schnittstelleneinrichtung und ein Verfahren zum Bereitstellen eines Authentisierungscredentials für eine kryptographisch geschützte Datenkommunikation zwischen der Schnittstelleneinrichtung, die mit einer Schnittstelle zum Verbinden mit mindestens einem Sensor und/oder Aktor verbindbar oder verbunden ist, und einer Steuerungseinrichtung, die einen technischen Prozess überwacht und/oder steuert. Der technische Prozess kann in einer industriellen Automatisierungsumgebung ablaufen. Er kann aber auch das Betreiben von autonom gesteuerten Kraft- und/oder Schienenfahrzeugen bzw. Robotern betreffen.

Es besteht ein Bedarf, mit Security-Mechanismen Produkte, beispielsweise Geräte (z.B. Steuergeräte, Internet-der-Dinge (IoT)-Geräte), Gerätekomponenten oder Softwarekomponenten und deren Datenübertragung, vor Manipulationen und/oder einem Reverse Engineering zu schützen. Kryptographische IT-Security-Mechanismen sind bereits beispielsweise in Smart Devices, beispielsweise in Geräten des Internets der Dinge (IoT), von cyberphysikalischen Systemen, von Automatisierungssystemen der Energietechnik oder von Fertigungssystemen, der Betriebstechnik und von anderen Anlagen in Einsatz.

Der Begriff "Security" bzw. "Sicherheit" bezieht sich im Rahmen der vorliegenden Beschreibung im Wesentlichen auf die Sicherheit bzw. Schutz, Vertraulichkeit und/oder Integrität von Daten sowie deren Übertragung und auch Sicherheit, Vertraulichkeit und/oder Integrität beim Zugriff auf entsprechende Daten. Auch die Authentifizierung bzw. Authentisierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die mittels Software und/oder Firmware oder in Kombination (Hardware-Software-Codesign) ausgestaltet sein kann, ausgeprägt sein. Die Funktion kann beispielsweise mittels eines Prozessors und/oder einer Speichereinheit zum Speichern von Programmbefehlen ausgeführt werden.

Industrielle Geräte, z.B. Steuereinrichtungen bzw. -geräte, Feldgeräte, loT-Geräte oder loT-Gateways, verwenden eine Mehrzahl von kryptographischen Schlüsseln, z.B. um sich zu authentisieren, um Integrität von gespeicherten Daten und Programmcode zu schützen, um Firmware-Updates zu prüfen und zu entschlüsseln und um die Integrität und ggf. die Vertraulichkeit von Projektierungs- und Konfigurationsdaten zu schützen. Um Daten, vor allem Steuerdaten, zu übertragen, können die genannten Geräte mit einer Datenkommunikationsschnittstelle ausgestattet sein, die drahtgebunden, optisch (insbesondere über einen Lichtwellenleiter) wie auch als Drahtlos-Schnittstelle, z.B. eine WLAN-, eine Bluetooth- oder eine NFC-Schnittstelle (NFC: Near Field Communication), ausgebildet und eingerichtet sein kann. Mit Hilfe dieser Datenkommunikationsschnittstelle kann das Gerät an ein Netzwerk angebunden werden bzw. mit anderen Geräten kommunizieren.

Es sind weitere drahtlose bzw. funkbasierte Übertragungstechniken hierbei einsetzbar (z.B. Safety over WLAN wie z.B. ProfiSafe, WiMax, Cloud Robotics, GSM, UMTS, LTE, 5G, Vehicle-2-X-Communication für autonome Fahrzeuge bzw. autonomes Fahren, funkbasierte Zugsicherung ETCS). Auch kann funkbasiert eine Positionsinformation (PVT: position, velocity, time) über ein Satellitennavigationssystem (GPS, Galileo, Beidou, Glonass) empfangen werden, die für eine Steuerungsfunktion des Geräts verwendet wird.

Die Integrität von Systemen, insbesondere von industriellen Automatisierungssystemen und von Geräten mit mehreren (Geräte-)Komponenten (z.B.: IO-Modul, CPU-Modul,...), ist ein wesentliches Schutzziel. Angenommen, beispielsweise die Firmware/Software eines Steuergerätes ist integer, dann könnte dennoch die richtige Ausführung von Steueraufgaben durch eine verbundene, kompromittierte Komponente (z.B. ein kompromittierter Sensor) beeinträchtigt werden. Entsprechendes gilt, wenn eine anderer als die vorgesehene Komponente (Sensor/ Aktor) verbunden ist.

Vor allem in einem industriellem Automatisierungsumfeld werden sogenannte PLCs - ein Programmable Logic Controller (PLC) oder auch Speicherprogrammierbare Steuerung (SPS) genannt - eingesetzt, die die Steuerung von technischen Prozessen bzw. eine Maschinenfunktion oder sogar eine gesamte Produktionslinie automatisieren. Die PLC erhält Daten von verschiedenen Eingabegeräten wie Schaltkontakten, Sensorelementen oder Messgeräten, verarbeitet die Eingabedaten solcher Sensoren gemäß dem im Controller programmierten Logikdiagramm oder den Steuerbefehlen. Abhängig vom Verarbeitungsergebnis der Eingabedaten steuert die PLC mit Steuerdaten beispielsweise Aktoren, z.B. Antriebe, Ventile oder Lüftungsklappen etc..

In der heutigen schon eingangs beschriebenen vernetzten "Welt" werden oft Funktionen einer PLC ganz oder teilweise in einen sogenannten Edge-Knoten mit einer virtuellen PLC (vPLC) verlagert.

IO-Module realisieren die Verknüpfung zwischen der Cyber-Domäne, z.B. Edge-Knoten, und der realen, physikalischen Welt über verbundene Sensoren und Aktoren. D.h. eine Steuerungsfunktion (virtualisierte Automatisierungsfunktion, z.B. eine vPLC) interagiert mit der realen Welt über ein IO-Modul und den damit verbundenen Sensoren und Aktoren.

Um seine Identität bei einer Authentisierung gegenüber einem Kommunikationspartner nachzuweisen, gibt es Gerätezertifikate (z.B. X.509, IDevID, LDevID). Neben Angaben zur eigentlichen Geräteidentität kann auch eine Information zu der auf dem Gerät ausgeführten Firmware in einem Gerätezertifikat enthalten sein. Ein Gerätezertifikat (z.B. X.509, IDevID, LDevID) ermöglicht einem Gerät, seine Identität bei einer Authentisierung gegenüber einem Kommunikationspartner nachzuweisen. Neben Angaben zur eigentlichen Geräteidentität kann auch eine Information zu der auf dem Gerät vorliegenden Firmware in einem Gerätezertifikat enthalten sein. Normalerweise wird ein digitales Zertifikat konzeptionell von einer CA (Certification Authority) ausgestellt. Herkömmlich handelt es sich dabei um eine zentrale, speziell geschützte Komponente einer Security-Infrastruktur. Es besteht die Möglichkeit, dass ein Gerät, insbesondere ein Embedded Gerät, eine eigene, lokale CA implementieren kann. Standardisierte Beispiele sind TCG DICE und DMTF SPDM "Security Protocol and Data Model" (https://www.dmtf.org/sites/default/files/standards/documents/DSP20S8 1.2.0.pdf ). Dies ermöglicht, die Information zum Gerät, die sich während der Nutzung des Geräts ändert, in einem Gerätezertifikat einfach aufzunehmen (z.B. Firmware-Version).

Aus DE102019126341B4 ist ein Internet-of-Things (IoT) Modul bekannt, das eine Schnittstelle aufweist, die das loT-Modul mit einer hybriden Single Pair Ethernet Leitung zum Daten- und Befehls-Austausch und zur Spannungsversorgung koppelbar ist, umfassend einen Controller für eine IP-basierte Kommunikation über die hybride Single Pair Ethernet Leitung.

Aus WO2022233806A1 ist ein Verfahren zur Kommunikation von loT Knoten oder loT Geräten in einem lokalen Netzwerk, bekannt. Ein loT-Knoten fordert ein Zertifikat an, wobei das Zertifikat insbesondere eine Adressinformation des IoT-Knotens enthält, die nur im lokalen Netzwerk gültig ist.

Es besteht ein Bedarf an einer verbesserten Geräteauthentisierung, insbesondere für die Geräteauthentisierung von remote IO-Modulen, die vor allem mit virtualisierten Steuereinrichtungen z.B. vPLCs. kommunizieren.

Es ist Aufgabe der vorliegenden Erfindung, Verfahren und Vor- bzw. Einrichtungen bzw. Einheiten zur Geräteauthentisierung, insbesondere von IO-Modulen, gegenüber dem oben genannten Stand der Technik insbesondere im Umfeld der Automatisierung zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Ein Aspekt der Erfindung betrifft eine Schnittstelleneinrichtung mit zumindest einer Schnittstelle zum Verbinden mit mindestens einem Sensor und/oder Aktor, wobei die Schnittstelleneinrichtung mit Hilfe einer Netzwerkschnittstelle über ein Datenkommunikationsnetzwerk an eine Steuerungseinrichtung Sensordaten und/oder Aktorsteuerdaten überträgt, die einen technischen Prozess überwacht und/oder steuert,
- aufweisend eine Berechtigungsnachweiseinheit, welche dazu ausgelegt ist, eine Identifizierungsinformation des zumindest einen über die Schnittstelle verbundenen Sensors und/oder Aktors zu ermitteln sowie die ermittelte Identifizierungsinformation auf Übereinstimmung mit einer zuvor hinterlegten Referenzidentifizierungsinformation zu überprüfen und ein der ermittelten Identifizierungsinformation zugeordnetes Authentisierungscredential bereitzustellen,
- und aufweisend eine Authentisierungseinheit, welche dazu ausgelegt ist, das bereitgestellte Authentisierungscredential zur kryptographisch geschützten Datenkommunikation mit der Steuerungseinrichtung zu verwenden, wenn das Überprüfungsergebnis positiv ist,
- ansonsten die Verwendung des bereitgestellten Authentisierungscredials zur kryptographisch geschützten Datenkommunikation mit der Steuerungseinrichtung zu unterlassen.

Die Identifizierungsinformation des zumindest einen über die Schnittstelle verbundenen Sensors und/oder Aktors kann insbesondere über diese Schnittstelle, insbesondere über die gleichen Signalleitungen beziehungsweise über den gleichen Übertragungskanal einer Drahtlosübertragung, ermittelt werden. Dies kann erfolgen, indem über diese Schnittstelle eine Identifizierungsinformation übermittelt, ermittelt oder ausgelesen wird (z.B. Seriennummer, auf einem Sensor und/oder Aktor gespeicherte Kalibrierdaten), oder indem eine Fingerprinting-Information des verbundenen Sensors und/oder Aktors ermittelt wird, beispielsweise mittels einer sogenannten Physically Unclonable Function (PUF), z.B. einer MEMS PUF eines MEMS-Sensors oder eines MEMS-Aktorelements, oder in Form eines Rauschsignals, insbesondere eines Spreizcode-Rauschsignals (Pseudo Random Noise), das abhängig von einer vorgebbaren Identifizierungsinformation generiert wird. Es ist jedoch auch denkbar, dass ein Sensor und/oder Aktor mit der Schnittstelleneinrichtung über zwei Teilschnittstellen verbunden ist, eine erste Teilschnittstelle zur Übertragung von Sensormessdaten oder eines Sensormesssignals und/oder von Aktorsteuerdaten oder eines Aktorsteuersignals, eine zweite Teilschnittstelle zur Übertragung einer Sensor-/Aktor-Identifizierungsinformation, beispielsweise in Form eines Digitalsignals oder als analoges Identifizierungssignal (z.B. als Spreizcode-Rauschsignal oder als PUF oder durch eine Signal, das abhängig von der Identifizierungsinformation moduliert ist). Die beiden Teilschnittstellen können "logisch" separiert sein und über die gleichen Signalleitungen übertragen werden (z.B. unterschiedliche Modulation), oder sie können über überseparate Signalleitungen eines Leiters übertragen werden, oder die Identifizierungsinformation kann über eine Abschirmung eines Leiters übertragen werden, wogegen die Sensor-/Aktorsignale-/daten über Signalleitungen übertragen werden, die innerhalb der Abschirmung angeordnet sind. Wenn der Sensor und/oder Aktor von der Schnittstelleneinrichtung mit Energie (Strom) versorgt wird, kann in einer Variante die Identifizierungsinformation des Sensors und/oder Aktors über die Energieversorgungsübertragungsteilschnittstelle ermittelt werden. In diesem Fall ist die zweite Teilschnittstelle zur Übertragung der Sensor-/Aktor-Identifizierungsinformation und die Energieversorgungsübertragungsteilschnittstelle als gemeinsame Teilschnittstelle ausgeführt. Es können jedoch auch drei Teilschnittstellen vorliegen, eine erste Teilschnittstelle zur Übertragung von Sensormessdaten oder eines Sensormesssignals und/oder von Aktorsteuerdaten oder eines Aktorsteuersignals, eine zweite Teilschnittstelle zur Übertragung der Sensor-/Aktor-Identifizierungsinformation und eine dritte zweite Teilschnittstelle als Energieversorgungsübertragungsteilschnittstelle. Die Teilschnittstellen bilden gemeinsam die Schnittstelle im Sinne der Erfindung.

Die Authentisierungseinheit kann des Weiteren dazu ausgestaltet sein, beim Verbindungsaufbau der kryptographisch geschützten Datenkommunikation den dazu benötigten Schlüssel mittels einer Authentisierung gegenüber der Steuerungseinrichtung basierend auf dem Authentisierungscredential und durch eine Schlüsselvereinbarung zwischen Schnittstelleneinrichtung und Steuereinrichtung einzurichten.

Erfindungsgemäß unterstützt der Schnittstelleneinrichtung eine Authentisierung der Schnittstelleneinrichtung gegenüber einem Kommunikationspartner, insbesondere der Steuerungseinrichtung, über die Datennetzwerkschnittstelle mittels eines Authentisierungscredentials, insbesondere einem digitalen Zertifikat, oder alternativ einem verifiable Credential oder einem Security-Token (z.B. OAuth 2.0) oder einem digital signierten Zertifikatsanfragenachricht oder einer Onboarding-Anfrage, insbesondere eine Onboarding-Anfrage für ein Zero-Tocuh-Onboarding (z.B. IETF Bootstrapping Remote Secure Key Infrastructure BRSKI, FIDO Device Onboard FDO).

Erfindungsgemäß ermittelt die Schnittstelleneinrichtung eine Identifizierungsinformation zumindest eines verbundenen Sensors/Aktors über die (Sensor/Aktor-)Schnittstelle und verwendet ein auf der Schnittstelleneinrichtung eingerichtetes Authentisierungscredential zur Authentisierung gegenüber dem Kommunikationspartner dann, wenn die ermittelte Identifizierungsinformation mit einem dem Authentisierungscredential zugeordneten Referenzidentifizierungsinformation übereinstimmt. Das eingerichtete Authentisierungscredential wird also dann verwendet, wenn die Identifizierungsinformation des zumindest einen verbundenen Sensors/Aktors mit der Referenzidentifikationsinformation übereinstimmt (identisch oder hinreichend ähnlich). Die Referenzidentifikationsinformation kann hierbei vorgebbar oder vorgegeben sein bzw. zuvor auf der Schnittstelleneinrichtung hinterlegt sein.

Die Berechtigungsnachweiseinheit kann eine kryptographische Zertifizierungseinrichtung aufweisen, die dazu ausgelegt ist, das der ermittelten Identifizierungsinformation zugeordnete Authentisierungscredential zu bilden und gegebenenfalls mittels eines kryptographischen Signaturschlüssels der kryptographischen Zertifizierungseinrichtung der Berechtigungsnachweiseinheit der Schnittstelleneinrichtung digital zu signieren. Vorzugsweise umfasst das gebildete Authentisierungscredential die ermittelte Identifizierungsinformation.

Das von der Schnittstelleneinrichtung verwendete Authentisierungscredential authentisiert somit nicht nur die Schnittstelleneinrichtung an sich, sondern die Kombination aus Schnittstelleneinrichtung und verbundenem Sensor/Aktor bzw. der Mehrzahl von verbundenen Sensoren/Aktoren.

Dies ermöglicht einem Kommunikationspartner, mit höherer Verlässlichkeit zu prüfen, ob empfangene Sensor-Daten (Messdaten) vertrauenswürdig sind, d.h. dass sich mit erhöhter Verlässlichkeit tatsächlich von dem erwarteten Sensor stammen, bzw. zu prüfen, dass gesendete Aktordaten (Steuerdaten) tatsächlich den vorgesehenen Aktor beeinflussen.

Ein weiterer Aspekt der Erfindung ist ein Verfahren zum Bereitstellen eines Authentisierungscredentials, das zur kryptographisch geschützten Datenkommunikation zwischen einer Schnittstelleeinrichtung, die mit einer Schnittstelle zum Verbinden mit mindestens einem Sensor und/oder Aktor verbindbar oder verbunden ist, und einer Steuerungseinrichtung verwendet wird, wobei über ein Datenkommunikationsnetzwerk die Schnittstelleneinrichtung an eine Steuerungseinrichtung, die einen technischen Prozess überwacht und/oder steuert, Sensordaten und/oder Aktorsteuerdaten überträgt, wobei folgende Schritte ausgeführt werden:
- Ermitteln einer Identifizierungsinformation des zumindest einen über die Schnittstelle verbundenen Sensors und/oder Aktors sowie überprüfen der ermittelten Identifizierungsinformation auf Übereinstimmung mit einer zuvor hinterlegten Referenzidentifizierungsinformation und bereitstellen eines der ermittelten Identifizierungsinformation zugeordnetes Authentisierungscredentials,
- verwenden des bereitgestellten Authentisierungscredentials zu der kryptographisch geschützten Datenkommunikation, wenn das Überprüfungsergebnis positiv ist,
- ansonsten unterlassen der Verwendung des bereitgestellten Authentisierungscredials zur kryptographisch geschützten Datenkommunikation.

Die (Aktor-)Steuerdaten bzw. Sensordaten können bidirektional, d.h. in beide Richtungen übertragen werden.

Die Steuerungseinrichtung kann das Authentisierungscredential überwachen und/oder auswerten und davon abhängig eine Maßnahme zur Steuerung des technischen Prozesses veranlassten. Die Maßnahme kann umfassen: Steuerungsfunktionalität anpassen und/oder die Produktionsplanung anpassen und/oder einem Bediener einen Warnhinweis anzeigen. Auch kann als Maßnahme ein Verbindungsabbau oder eine Reauthentication (Wieder-Authentisierung) der Kommunikationsverbindung angestoßen bzw. initiiert werden.

Die genannten Schritte können wiederholt werden. Die Wiederholung der Schritte kann zeit- und/oder ereignisgesteuert ausgelöst werden.

Des Weiteren wird ein Computerprogramm(produkt) umfassend Programm-Code, der von mindestens einem Prozessor ausgeführt werden kann und der bewirkt, dass der mindestens eine Prozessor das erfindungsgemäße Verfahren und dessen Ausführungsformen ausführt. Das Computerprogramm kann auf einer der Vorrichtungen der vorstehend genannten Art ablaufen oder als Computerprogrammprodukt auf einem computerlesbaren Medium gespeichert sein.

Zusätzlich kann eine Variante des Computerprogramm(produkt)s mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine sein.

Die Schnittstelleneinrichtung, das Verfahren und Computerprogramm(produkt) können entsprechend der Weiterbildungen/Ausführungsformen der vorgenannten Schnittstelleneinrichtung und derer Weiterbildungen/Ausführungsformen und umgekehrt ausgebildet sein.

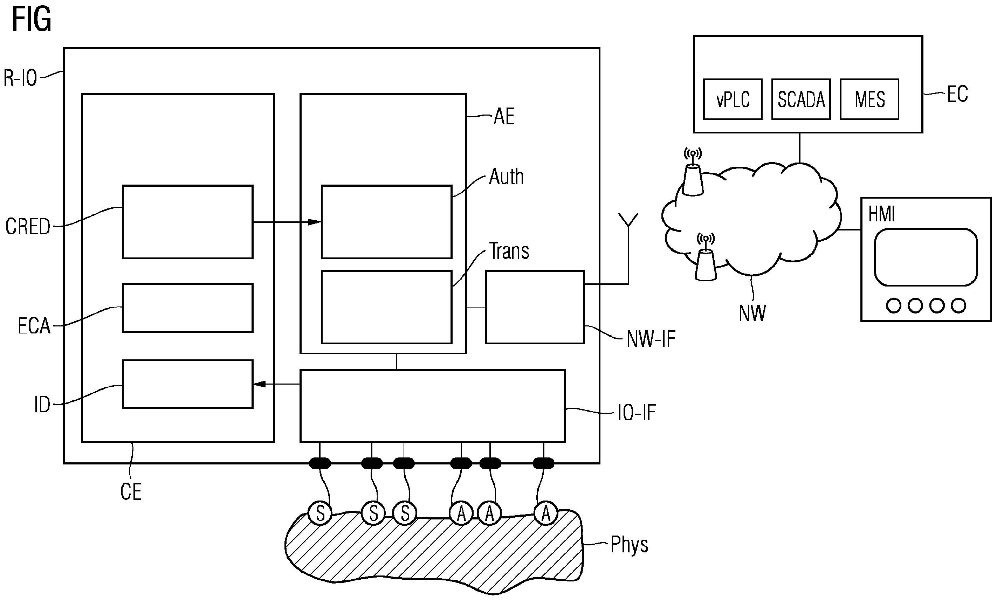

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
Die Figur zeigt ein Anwendungsbeispiel im Automatisierungsumfeld, in dem über ein Datenkommunikationsnetzwerk ein virtuelles Steuergerät mit einer Schnittstelleneinrichtung verbunden ist, das über Sensoren und/oder Aktoren mit physikalischen Komponenten wie Maschinen, Geräte etc. gekoppelt ist.

Die Figur zeigt ein Automatisierungssystem zur Steuerung und Überwachung von physikalischen Komponenten, welche durch ein virtualisiertes Steuergerät vPLC (z.B. virtual programmable logic controller) steuerbar sind. Dieses Steuergerät bzw. Steuerungseinrichtung kann über ein drahtgebundenes oder funkbasiertes Datenkommunikationsnetzwerk NW auf eine Schnittstelleneinrichtung, die hier im Beispiel vorzugsweise als ein remote IO-Modul oder loT-Modul ausgebildet ist, zugreifen, das über Sensoren S und Aktoren A mit physikalischen Komponenten der realen, physikalischen Welt Phys gekoppelt ist.

Das remote (abgesetzte bzw. entfernt angeordnete) IO-Modul R-IO verfügt über eine Ein- /Ausgabe-Schnittstelle IO-IF, das mit Sensoren S und Aktoren A (z.B. 4..20mA-Schnittstelle, I2C, SPI, Analogschnittstelle) verbunden ist. Weiterhin verfügt es über eine Netzwerkschnittstelle NW-IF, z.B. Ethernet, WLAN, 5G, und eine Authentisierungseinheit AE zur kryptographisch geschützten Kommunikation, z.B. MACsec, IPsec, TLS, DTLS, QUIC, OPC UA Secure Conversation, Profinet Security. Diese kann Sensor/Aktor-Daten bei der Übertragung über das Datennetzwerk NW kryptographisch schützen (Verschlüsselung und/oder kryptographischer Integritätsschutz, vorzugsweise eine authenticated Encryption (Verschlüsselung mit integriertem Unverfälschtheitschutz). Der dazu benötigte Schlüssel wird beim Verbindungsaufbau durch eine Authentisierung und Schlüsselvereinbarung (authentication and key agreement) basierend auf einem Berechtigungsnachweis bzw. Authentisierungscredential des IO-Moduls eingerichtet. Weiterhin wird dabei üblicherweise der Kommunikationspartner durch das IO-Modul authentisiert, z.B. die Steuerungseinrichtung bzw. das Steuergerät vPLC oder ein SCADA-System SCADA.

Das IO-Modul weist eine Sensor-Aktor-spezifische Berechtigungsnachweiseinheit, die im folgenden auch als Geräteauthentisierungscredential-Managern CE (S/A-spezifischer Device Authentication Credential Manager) bezeichnet wird, auf. Dieser ermittelt mittels einer Identifikationseinheit ID eine Identifizierungsinformation zumindest eines verbundenen Sensors oder Aktors, vorzugsweise mehrerer oder aller verbundener Sensoren und Aktoren. Davon abhängig wählt der Manager CE ein Geräteauthentisierungscredential aus bzw. gibt dieses frei. Dieses Authentisierungscredential wird durch die Authentisierungseinheit CRED, zur kryptographisch geschützten Kommunikation verwendet, wobei für die Authentisierung selbst und die Schlüsselvereinbarung eine innerhalb der Authentisierungseinheit implementierte Einheit Auth zuständig ist, wobei eine Einheit Trans nach einer gültigen Authentisierung die Schlüsselvereinbarung für die sichere Übertragung der Sensor- und/oder Aktorsteuerdaten nutzen kann.

Es sind folgende Beispiele für (Sensor/Aktor-)Identifizierungsinformation denkbar:
- Hersteller/Typ/Seriennummer (über Digitalschnittstelle auslesbar)
- Kalibrierungsdaten (falls auslesbar)
- Auslesbare weitere Identifizierungsdaten, z.B. Produktionsdatum
- Physical Fingerprint (z.B. Pulsantwort / TDR, Reflektionsmuster auf ein Rauschsignal oder ein anderes Anregungssignal)
- Konfiguration der IO-Schnittstelle (z.B. Konfiguration der AD- oder DA-Wandlers einer Analogschnittstelle, z.B. Wertebereich, Strom- oder Spannungsschnittstelle).

Das IO-Modul kann eine oder mehrere Schnittstellen IO-IF zum Verbinden von Sensoren und/oder Aktoren aufweisen. Die Identifizierungsinformation eines Sensors/Aktors kann über dieselbe elektrische/optische/induktive Verbindung (Leitung) wie die Messwert- /Steuerwertübertragung erfolgen, oder über eine separate elektrische/optische/induktive Verbindung (Leitung), die dann jedoch vorzugsweise über das gleiche Kabel mit mehreren elektrische/optische/induktive Verbindung (Leitung) erfolgt. Das Kabel kann beispielsweise zwei Leiter für ein analoges elektrisches Sensor/Aktor-Signal (Messsignal, Steuersignal) umfassen, und zwei elektrische Leiter für eine digitale Übertragung einer Sensor/Aktor-Identifizierungsinformation.

Wenn die ermittelte Identifizierungsinformation mit einem dem Authentisierungscredential zugeordneten Referenzidentifizierungsinformation übereinstimmt (identisch oder hinreichend ähnlich).

Die Referenzidentifizierungsinformation kann im Authentisierungscredential enthalten sein (z.B. Extension in X.509 Authentisierungszertifikat oder einem diesem zugeordneten X.509 Attributzertifikat), oder sie kann dem Authentisierungscredential auf dem IO-Modul zugeordnet gespeichert sein. Die Referenzidentifizierungsinformation kann beispielsweise bei der Inbetriebnahme des jeweiligen Sensors bzw. Aktors angelernt werden.

Das Ermitteln und Prüfen der Sensor/Aktor-Identifizierungsinformation kann vor allem separat je Sensor-/Aktor-Schnittstelle erfolgen. Es ist jedoch auch möglich, dass die Sensor-/Aktor-Identifizierungsinformation für eine Mehrzahl der Sensor-/Aktor-Schnittstellen des IO-Moduls oder für alle Sensor-/Aktor-Schnittstellen des IO-Moduls gemeinsam erfolgt. Sobald sich eine der Sensor/Aktor-Schnittstellen-spezifischen Identifizierungsinformationen ändert, wird die Nutzung eines Authentisierungscredentials unterlassen. IO-Modul kann das Athentisierungscredial sperren oder es kann ein neues/modifiziertes Authentisierungscredential durch das IO-Modul, insbesondere durch dessen Berechtigungsnachweiseinheit bzw. durch die darin umfasste kryptographische Zertifizierungseinrichtung, gebildet oder angefordert werden.

Bei nicht vorliegender oder nicht hinreichender Übereinstimmung der Sensor/Aktor-Identifizierungsinformation mit der Referenzidentifizierungsinformation kann das IO-Modul beispielsweise mit Maßnahmen wie folgt reagieren:
- Es erfolgt keine Authentisierung gegenüber dem Kommunikationspartner, bzw. die Nutzung eines Authentisierungscredentials und/oder einer Authentisierungsfunktionalität gegenüber dem Kommunikationspartner wird gesperrt oder nicht freigegeben. Es erfolgt dadurch dann auch keine Datenübertragung, beziehungsweise keine authentisierte Datenübertragung.
- Es kann ein Ersatz-Authentisierungscredential vom IO-Modul für die Authentisierung gegenüber dem Kommunikationspartner verwendet werden. Dadurch können Sensor-/Aktor-Daten mit dem Kommunikationspartner kryptographisch geschützt, authentisiert übertragen werden. Anhand des Ersatz-Authentisierungscredentials kann der Kommunikationspartner jedoch erkennen, dass diese Daten vom IO-Modul nicht der erwarteten Senor-/Aktor-Identifizierung zugeordnet werden konnten.
- Das IO-Modul kann (lokal auf dem IO-Modul, insbesondere durch dessen Berechtigungsnachweiseinheit bzw. durch die darin umfasste kryptographische Zertifizie-rungseinrichtung) ein aktualisiertes/neues Authentisierungscredential (X.509, Attestation) bilden, das der ermittelten Sensor-/Aktor-Identifizierungsinformation zugeordnet ist. Insbesondere kann das aktualisierte/neue Authentisierungscredential die ermittelte Sensor-/Aktor-Identifizierungsinformation umfassen (als Rohdaten oder vorverarbeitet). Das gebildete Zertifikat kann dann von dem IO-Modul zur Authentisierung gegenüber dem Kommunikationspartner verwendet werden, um die Sensor/Aktor-Daten gemeinsam mit diesem authentisiert zu übertragen. Weiterhin kann das IO-Modul (bzw. dessen Berechtigungsnachweiseinheit bzw. die darin umfasste kryptographische Zertifizierungseinrichtung) ein aktualisiertes/neues dem eigentlichen Authentisierungscredential (X.509, Attestation) zugeordnetes Attributzertifikat bilden, das der dem eigentlichen Authentisierungscredential zuordenbar ist und das die ermittelten Sensor-/Aktor-Identifizierungsinformation umfasst. Durch das Attributzertifikat wird das Authentisierungscredential der ermittelten Sensor-/Aktor-Identifizierungsinformation kryptographsich geschützt und damit verlässlich überprüfbar zugeordnet.

Die Authentisierungseinheit CRED kann ein geeignetes, zur ermittelten Sensor/Aktor-Identifizierung passendes bzw. zugeordnetes Authentisierungscredential auswählen oder mittels einer eingebetteten Zertifizierungsstelle ECA bilden. Die eingebettete Zertifizierungsstelle ECA kann dabei (ähnlich wie bei SPDR) ein IDevID-Zertifikat und/oder ein LDevID-Zertifikat des IO-Moduls verwenden, um ein von der eingebetteten Zertifizierungsstelle ausgestelltes S/A-spezifisches Geräteauthentisierungszertifikat digital zu signieren und damit als gültig und diesem IO-Modul zugeordnet zu bestätigen. Das S/A-spezifisches Geräteauthentisierungszertifikat kann als direkt anwendbares Authentisierungscredential, das einen öffentlichen Schlüssel umfasst, oder als Attributzertifikat, das einem weiteren Authentisierungszertifikat, das einen öffentlichen Schlüssel umfasst, zugeordnet ist, oder als verifiable Credential, als verifiable Presentation, als Security-Token (z.B. OAuth2.0 Token), oder als Attestierung (z.B. EAT Token, EAT: Entity Attestation Token) ausgestaltet sein. Das S/Aspezifisches Geräteauthentisierungscredential umfasst vorzugsweise die ermittelte S/A-Identifizierungsinformation (als Rohdaten oder vorverarbeitet). Weiterhin kann das S/Aspezifische Geräteauthentisierungscredential die ermittelte S/A-Identifizierungsinformation referenzieren.

Der Kommunikationspartner in einem sogenannten Edge-Knoten EC realisiert sein, z.B. das virtualisierte Steuergerät vPLC oder das SCADA-System SCADA oder das Manufacturing Execution System MES, oder eine Anzeigegerät HMI können das vom IO-Modul bei der Authentisierung und Schlüsselvereinbarung zur Authentisierung vom IO-Modul verwendete Authentisierungscredential auswerten und davon abhängig z.B. die Steuerungsfunktionalität anpassen, die Produktionsplanung anpassen, oder einem Bediener einen Warnhinweis anzeigen.

Es ist eine Konstellation möglich, bei der zwei Steuerungseinrichtungen oder ggf. auch mehr Steuerungseinrichtungen vorliegen. Beispielsweise würde eine Authentisierung des IO-Moduls gegenüber einer ersten Steuerungseinrichtung, z.B. der virtuellen PLC vPLC, stattfinden. Es gäbe dann noch eine zweite Steuerungseinrichtung, z.B. "echte" ggf. hardware-basierte PLC, die beispielsweise im IO-Modul R-IO in der Schnittstelle IO-IF integriert ist. Dann kann die zusätzliche erste Steuerungseinrichtung der zweiten Steuerungseinrichtung eine Art Rezepturinformation oder Projektierungsinformation bereitstellen, die die zweite Steuerungseinrichtung dann zur Steuerung des technischen Prozesses verwendet (abhängig von dem Authentisierungscredential, das die Schnittstelleneinrichtung gegenüber der ersten Steuerungseinrichtung verwendet).

Der Geräteauthentisierungscredential-Manager kann weiterhin - bei aufgebauten authentisierten Kommunikationsverbindungen - überwachen, ob sich bei bestehender Kommunikationsverbindung die Identifizierungsinformation ändert, und davon abhängig einen Verbindungsabbau oder eine wiederholte Authentisierung der Kommunikationsverbindung anstoßen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, Multi-Chip-Module, anwendungsspezifische integrierte Schaltungen (ASICs), System on Chips, programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Schnittstelleneinrichtung (R-IO) mit zumindest einer Schnittstelle (IO-IF) zum Verbinden mit mindestens einem Sensor (S) und/oder Aktor (A), wobei die Schnittstelleneinrichtung mit Hilfe einer Netzwerkschnittstelle (NW-IF) über ein Datenkommunikationsnetzwerk (NW) an eine Steuerungseinrichtung (vPLC) Sensordaten und/oder Aktorsteuerdaten überträgt austauscht, die einen technischen Prozess überwacht und/oder steuert,
- aufweisend eine Berechtigungsnachweiseinheit (CE), welche dazu ausgelegt ist, eine Identifizierungsinformation des zumindest einen über die Schnittstelle verbundenen Sensors und/oder Aktors über die Schnittstelle zu ermitteln sowie die ermittelte Identifizierungsinformation auf Übereinstimmung mit einer zuvor hinterlegten Referenzidentifizierungsinformation zu überprüfen und ein der ermittelten Identifizierungsinformation zugeordnetes Authentisierungscredential bereitzustellen,
- und aufweisend eine Authentisierungseinheit (AE), welche dazu ausgelegt ist, das bereitgestellte Authentisierungscredential zur kryptographisch geschützten Datenkommunikation mit der Steuerungseinrichtung zu verwenden, wenn das Überprüfungsergebnis positiv ist,
- ansonsten die Verwendung des bereitgestellten Authentisierungscredials zur kryptographisch geschützten Datenkommunikation mit der Steuerungseinrichtung zu unterlassen.

2. Schnittstelleneinrichtung nach dem vorhergehenden Anspruch, **dadurch gekennzeichnet, dass** die Authentisierungseinheit des Weiteren dazu ausgestaltet ist, beim Verbindungsaufbau der kryptographisch geschützten Datenkommunikation den dazu benötigten Schlüssel mittels einer Authentisierung gegenüber der Steuerungseinrichtung basierend auf dem Authentisierungscredential und durch eine Schlüsselvereinbarung zwischen Schnittstelleneinrichung und Steuereinrichtung einzurichten.

3. Schnittstelleneinrichtung nach einem der vorhergehenden Ansprüche, **dadurch gekennzeichnet, dass** Berechtigungsnachweiseinheit eine Zertifizierungseinrichtung aufweist, die dazu ausgelegt ist, dass der ermittelten Identifizierungsinformation zugeordnete Authentisierungscredential zu bilden und gegebenenfalls mittels eines Signaturschlüssels der Zertifizierungseinrichtung digital zu signieren.

4. Schnittstelleneinrichtung nach dem vorhergehenden Anspruch, **dadurch gekennzeichnet, dass** das gebildete Authentisierungscredential die ermittelte Identifizierungsinformation umfasst.

5. Verfahren zum Bereitstellen eines Authentisierungscredentials, das zur kryptographisch geschützten Datenkommunikation zwischen einer Schnittstelleeinrichtung, die mit einer Schnittstelle zum Verbinden mit mindestens einem Sensor und/oder Aktor verbindbar oder verbunden ist, und einer Steuerungseinrichtung (vPLC) verwendet wird, wobei über ein Datenkommunikationsnetzwerk (NW) die Schnittstelleneinrichtung an eine Steuerungseinrichtung (vPLC), die einen technischen Prozess überwacht und/oder steuert, Sensordaten und/oder Aktorsteuerdaten überträgt, wobei folgende Schritte ausgeführt werden:
- Ermitteln einer Identifizierungsinformation des zumindest einen über die Schnittstelle verbundenen Sensors und/oder Aktors zu ermittelt sowie überprüfen der ermittelten Identifizierungsinformation auf Übereinstimmung mit einer zuvor hinterlegten Referenzidentifizierungsinformation und bereitstellen eines der ermittelten Identifizierungsinformation zugeordnetes Authentisierungscredential,
- verwenden des bereitgestelltes Authentisierungscredentials zu der kryptographisch geschützten Datenkommunikation, wenn das Überprüfungsergebnis positiv ist,
- ansonsten unterlassen der Verwendung des bereitgestellten Authentisierungscredials zur kryptographisch geschützten Datenkommunikation.

6. Verfahren nach dem vorhergehenden Anspruch, **dadurch gekennzeichnet, dass** die Steuerungseinrichtung das Authentisierungscredential überwacht und/oder auswertet und davon abhängig eine Maßnahme zur Steuerung des technischen Prozesses veranlasst.

7. Computerprogrammprodukt umfassend einen durch mindestens eine Recheneinheit ausführbaren Programmkode, welches Befehle aufweist, die die Ausführung des Verfahrens nach einem der vorhergehenden Verfahrensansprüche veranlassen.
